# EUROPEAN PATENT APPLICATION

(11) **EP 2 191 755 A1**
(43) Date of publication of application: **02.06.2010**
(21) Application number: 08075908.7
(22) Date of filing: 28.11.2008
(51) Int. Cl.: A47K 3/00, E04F 19/04

(54) **A sealant tape and a method of producing said sealant tape**

(71) Applicant: Supertape B.V., 4879 AP Etten-Leur (NL)
(72) Inventor: van Exsel, Adrianus Josephus Maria, 4891 PV Rijsbergen (NL)
(74) Representative: Altenburg, Bernardus Stephanus Franciscus

(57) **Abstract**

The invention relates to a sealant tape (1) for concealing a transition between an upright wall (W) and a top surface (B) at an angle with said upright wall (W), for example between a tiled wall and the edge of a bath. Such a sealant tape (1) comprises
- first and second longitudinal edges (6,7),
- first and second sides (3,4), and
- a longitudinal hinge (5) that facilitates folding of the tape (1) such that at the second side (4) the angle between the first edge (6), the hinge (5) and the second edge (7) is less than 145°,
The sealant tape (1) according to the invention comprises a carrier (2) which at the first side (3)
- between the first edge (6) and the hinge (5) is provided with a layer of a pressure-sensitive adhesive (8), and
- between the second edge (7) and the hinge (5) a continuous layer of a sealant material (10).
The invention also relates to a method of manufacturing the sealant tape (1).

## Description

The present invention relates to a sealant tape suitable for concealing a transition between an upright wall and a top surface.

Such a sealant tape, which has a folding groove along its length, is known in the art. For example, RCR International Inc. (Quebec, Canada) manufactures a tape (SC13111) that is provided on one side thereof with a sealant material. Such a tape is used for example to conceal the caulking joint between a bath and the vertical wall behind the bath, wall-mounted washbasin, or the worktop of a kitchen sink and the vertical wall behind it. Such caulking joints have a tendency to develop unsightly patches due to the growth of mildew. The objective of the sealant tape is to pass any water running down from the vertical wall to e.g. the bath. A sealant tape has, in comparison to a non-dedicated tape, improved sealing properties in that it is better capable of accommodating surface irregularities, for example of a surface made of tiles. To this end, a sealant tape comprises a carrier provided with a layer of sealant material having a thickness of at least 0.5 mm.

The problem with such a sealant tape is that its carrier, which is usually made of plastic, has a memory effect: once the tape is folded along the folding groove, the tape has a tendency to become flat again. As a result, sealant tape that has been applied with its second edge to the upright wall and with the first edge to a top surface, has a tendency to come off the surface it has been placed against, or at least diminish the effectiveness of the sealant material to seal against the (irregular) surface it has been put in contact with.

It is an object of the present invention to provide a sealant tape allowing for improved sealing properties.

To this end, the invention provides a sealant tape for concealing a transition between an upright wall and a top surface at an angle with said upright wall, the tape having
- first and second longitudinal edges,
- first and second sides, and
- a longitudinally extending hinge that facilitates folding of the tape such that at the second side the angle between the first edge, the hinge and the second edge is less than 145°,
wherein the tape comprises a carrier which at the first side
- between the first edge and the hinge is provided with a layer of a pressure-sensitive adhesive (PSA), and
- between the second edge and the hinge is provided with a continuous layer of a sealant material,
the sealant material having a shear strength that is at least 8 times lower than that of the PSA.

The present inventor has surprisingly turned the problem of flattening of a sealant tape into an advantage, by providing a sealant tape that can be firmly fixed to one surface thanks to the use of pressure-sensitive adhesive, whereas the second edge with sealant material on its first side is pressed against the surface of, for example, the upright wall thanks to the memory effect of the carrier. Generally, the carrier will be made of plastic, such as polyethylene. Other materials such as waterproof cardboard are not excluded, but plastic will be preferred material. A sealant tape is a generally flat, flexible strip capable of being rolled up, having a side with adhesive properties. A sealant material is a material that displays elastomeric behaviour and has a shear strength suitable for sealing (as detailed in the example section). The pressure sensitive adhesive layer comprises a pressure sensitive adhesive, i.e. a composition comprising as an adhesive compound a polymer customarily having a molecular weight Mz in the range of 50,000 to 1,500,000 Da, more customarily 275,000 to 1,500,000 Da. Here Mz is the double mass-averaged molecular weight such as determined using gel permeation chromatography (as described in PCT/NL2006/000102). The polymer will generally have a glass transition temperature (Tg) of 0°C or less. The term "hinge" is to be understood as a local weakening of the carrier, said weakening extending in a longitudinal direction over the length of the tape. By way of example, the weakening is provided as a longitudinally extending reduction of the thickness of the carrier, for example a score or a groove. In addition or alternatively, the local weakening of the carrier may be achieved by a different material, e.g. the material of the carrier locally containing an elevated concentration of plasticizer. The material may also be an entirely different material, for example the carrier may consist of two halves of polyethylene joined by the more elastic ethyl-vinyl acetate copolymer. In both cases the carrier may be manufactured by co-extrusion. The hinge resides between the edges of the tape, e.g. about half-way, as is often the case.

According to a preferred embodiment, the second edge of the carrier has a taper or flap away from the second side of the tape and away from the hinge.

In the present application, the term "away from the second side" means in the general direction from the second side towards the first side. This allows water to run onto the tape more easily, preventing the build up of water over the caulking material of a joint, as a result of which water might penetrate to the caulking joint or gap between the bath and the upright wall.

According to a preferred embodiment, the continuous layer of sealant material has a thickness of at least 0.7 mm, and preferably at least 0.9 mm

This provides ample sealing even in case of irregular surface of the upright wall, which may for example be a tiled wall. Generally, the layer of sealant material will have a thickness of less than 4 mm, such as less than 2 mm.

According to a preferred embodiment, the carrier of the tape is made of plastic having at the thinnest part of the hinge a thickness of 0.4-4 mm, preferably 0.5 - 3 mm.

The tape according to the present invention may be thicker at the hinge than known tapes, because use is made of the memory effect. Such a tape also helps to prevent water from accumulating at the folding joint, which is currently decreased in thickness (to reduce the memory effect) as a result of which water accumulates at the folding joint.

According to a advantageous embodiment, the hinge is a groove at the first side of the carrier.

This reduces the chance of the accumulation of dirt on the second side of the sealant tape.

The sealing tape according to the invention will in generally be provided with a release liner at the first side of the tape.

This makes it convenient to unroll and apply.

According to a preferred embodiment, there is a separate release liner for the pressure-sensitive adhesive and for the sealant material adjacent to the second edge.

This allows the tape to be positioned with one layer against one surface, before contacting the other layer to its surface. Generally it will be preferred to remove the liner from the layer of sealant material first, and then position the tape, and subsequently remove the liner from the pressure-sensitive adhesive. This makes it easy to reposition the tape before it is in its final position.

According to a preferred embodiment, there is a second continuous layer of sealant material between the first edge and the layer of pressure-sensitive adhesive.

Generally, the thickness of the carrier at the location of the layer of pressure-sensitive adhesive may be larger than at the location of the second continuous layer of sealant material. Advantageously the second layer of sealant material will be level with or more advantageously slightly protruding with respect to the layer of pressure-sensitive adhesive. This allows for sealing at the first edge as well. According to a preferred embodiment, the second layer of sealant material and the layer of pressure-sensitive adhesive will share a single release liner. It is even more preferred if there is no pressure-sensitive adhesive between the second edge and the hinge, because such a tape can be positioned easily and, after removal of the release liner of the pressure-sensitive adhesive, securely fixed.

According to a first preferred embodiment, the sealant tape has a single hinge.

This allows for very accurate positioning of the tape and hence an aesthetically pleasing result.

According to a second preferred embodiment, the sealant tape has two hinges.

This allows for accommodating of the presence of caulking material at the joint between the upright wall and the top surface .

Preferably the centre lines of the two hinges are 3 - 10 mm apart, to still achieve very acceptable positioning of the tape.

The present invention also relates to a method of manufacturing a sealant tape according to the invention, wherein a carrier is provided, in no particular order, with
a) a continuous layer of sealant material and a release liner;
b) a layer of a pressure-sensitive adhesive by applying a release liner provided with the layer of pressure-sensitive adhesive to the carrier.

The carrier is for example an elongated carrier of plastic material such as polyethylene made by extrusion, as is well-known in the art.

The present invention will now be illustrated with reference to the drawing, where
fig. 1 represents a perspective view of a sealant tape according to the invention;
fig. 2 is a sectional view along line II-II of fig. 1;
fig. 3 shows a sectional view of the tape of fig. 1 applied to the edge of a bath and a tiled wall;
fig. 4 shows a sectional view analogous to fig. 2 of an alternative tape according to the invention;
fig. 5 shows a sectional view of yet another alternative tape according to the invention; and
fig. 6 shows the tape of fig. 5 applied to the edge of a bath and a tiled wall.

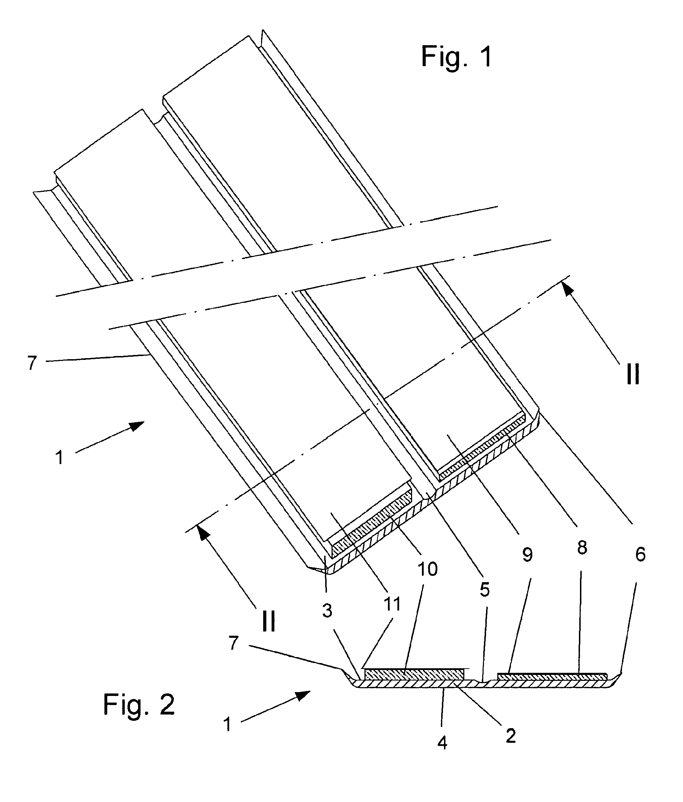

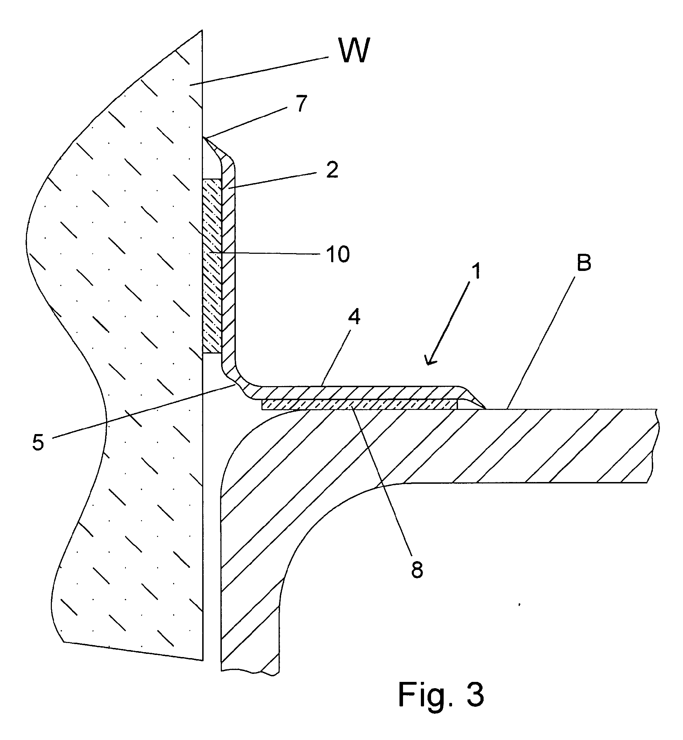

Fig. 1 shows a sealant tape 1 according to the invention, comprising a carrier 2. The carrier 2 has a first side 3 (Fig. 2) that will be hidden from view after application of the sealant tape to a surface that, and a second side 4 will be visible after application of the sealant tape to a surface. The carrier 2 comprises a longitudinal hinge 5 to facilitate folding of the sealant tape 1. This hinge 5, e.g. a score (e.g. cut with a knife) or as shown here a groove, is preferably located at the first side 3. The carrier 2 has a first edge 6 and a second edge 7. According to a preferred embodiment, and as shown in fig. 1-3, edges 6, 7 of the carrier 2 are tapered, more specifically at an angle with the second side 4, pointing away from both the second side 4 and the hinge 5. These tapered edges 6, 7 aid in the prevention of water entering between applied sealant tape 1 and the surface (fig. 3) to which the sealant tape is applied.

The sealant tape 1 according to the invention comprises - at its first side - between the first edge 6 and the hinge 5 a layer of a pressure-sensitive adhesive 8, covered with a release liner 9. In addition, the sealant tape 1 according to the invention comprises between the first edge 7 and the hinge 5 a layer 10 of a sealant material, covered with a release liner 11. The release liners 9 and 11 will have to be removed before and/or during application of the sealant tape 1.

For any sealant tape according to the invention, it is preferred that the distal end of the taper at the first edge 6 extends to beyond the plane of the pressure-sensitive adhesive 8 facing away from the carrier 2. It is also preferred that the distal end of the taper at the second edge 7 extends to beyond the plane of the sealant material 10 facing away from the carrier 2.

The release liner 11 may be siliconised paper. In case of the pressure-sensitive adhesive 8, the release liner 9 is preferably a material with a high tear-strength, such as a polyethylene film. This allows the quick and complete removal of the release liner 9 even when the sealant material 10 of the sealant tape 1 has already been positioned and if it weren't for the release liner 9 in contact with a substrate, such as a vertical tiled wall W (fig. 3). In fig. 3, B represents the substantially horizontal edge (top surface) of a bath. As shown here, the sealant tape 1 is folded over about 90° and the sealant material 10 adheres to and seals against the tiled wall W and the pressure sensitive adhesive adheres to the bath B. Thanks to the memory effect of the carrier 2, the layer 10 of sealant material is pressed firmly against the wall W. The pressure sensitive adhesive 8 will withstand the shear forces exerted by the bent carrier 2. In time, the memory effect will subside, but by then the sealant material will sufficiently stick to the wall W.

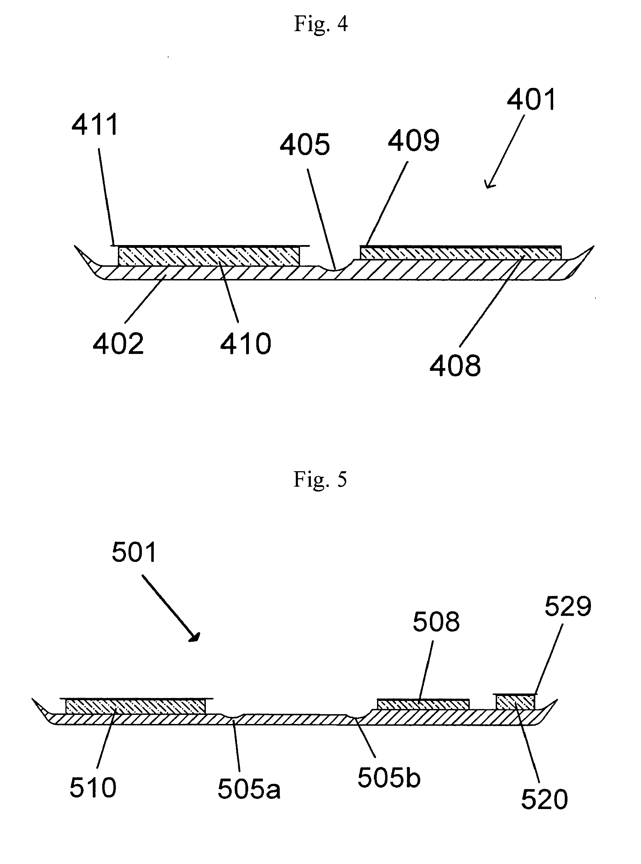

Fig. 4 shows a sectional view of a sealant tape 401 substantially according to fig. 2, comprising a carrier 402 comprising a longitudinal hinge 405. The difference is that where the pressure-sensitive adhesive 408 (covered with a release liner 409) is, the carrier is thicker than where the layer 410 of a sealant material (covered with a release liner 411) is.

Fig. 5 corresponds to fig. 4, except for two differences. Firstly, the sealant tape 501 comprises two longitudinal hinges (505a and 505b). To guarantee sufficient force, they are relatively shallow compared to the longitudinal hinge 5 of fig. 3. The second difference is that a second, narrow layer 520 of a sealant material (covered with release liner 529) is provided. It will be clear that 508 is the pressure sensitive adhesive and 510 the first layer of sealant material.

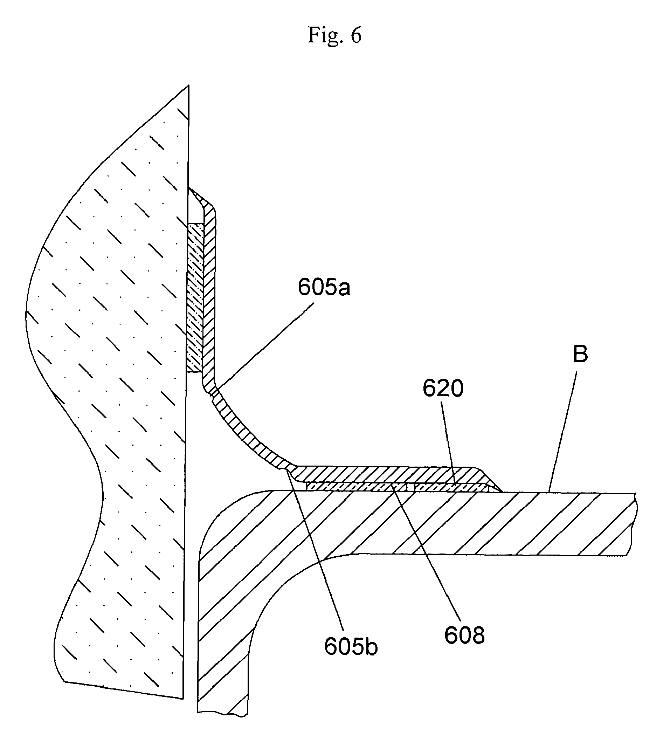

Fig. 6 shows the sealant tape of Fig. 5 in use. Because the sealant tape exhibits a less acute angle (compare with Fig. 3) thanks to the use of two longitudinal hinges (605a, 605b), water will run off more easily. The second narrow layer 620 of sealant material adjacent to the layer of pressure sensitive adhesive 608 avoids any entry of water in case surface B suffers from surface roughness as well, which may be the case if, for example, that surface B is tiled as well.

### Shear strength

The shear strength is expressed in hours, and was measured using the Afera 5012 International Harmonised Test Method edition 2004, albeit with two differences. The dimensions of the test specimen were: width 19 mm and length 24 mm. Testing takes place in the longitudinal direction of the test specimen. The testing mass is 250 g. A time for the shear strength for the sealant material as determined by cohesive failure is generally at least 2 hours, preferably at least 4 hour, and more preferably at least 10 hours. For the PSA, the shear strength is generally more than 50 hours, such as more than 100 hours.

A suitable sealant material is available from, for example, Bostik Inc. Middleton MA, USA.

## Claims

1. A sealant tape (1) for concealing a transition between an upright wall (W) and a top surface (B) at an angle with said upright wall (W), the tape (1) having
- first and second longitudinal edges (6, 7),
- first and second sides (3, 4), and
- a longitudinally extending hinge (5) that facilitates folding of the tape (1) such that at the second side (4) the angle between the first edge (6), the hinge (5) and the second edge (7) is less than 145°,
wherein the tape (1) comprises a carrier (2) which at the first side (3)
- between the first edge (6) and the hinge (5) is provided with a layer (8) of a pressure-sensitive adhesive (PSA), and
- between the second edge (7) and the hinge (5) is provided with a continuous layer (10) of a sealant material, the sealant material having a shear strength that is at least 8 times lower than that of the PSA.

2. The sealant tape according to claim 1, wherein the second edge (7) of the carrier (2) has a taper or flap away from the second side (4) of the tape (1) and away from the hinge (5).

3. The sealant tape according to claim 1 or 2, wherein the continuous layer (10) of sealant material has a thickness of at least 0.7 mm, and preferably at least 0.9 mm.

4. The sealant tape according to any of the preceding claims, wherein the carrier (2) of the tape (1) is made of plastic having at the thinnest part of the hinge (5) a thickness of 0.4-4 mm, preferably 0.5 - 3 mm.

5. The sealant tape according to any of the preceding claims, wherein the hinge (5) is a groove at the first side (3) of the carrier (2).

6. The sealant tape according to any of the preceding claims, wherein at the first side (3) the tape (1) is provided with release liner (9, 11).

7. The sealant tape according to claim 6, wherein there is a separate release liner (9 viz. 11) for the pressure-sensitive adhesive and for the sealant material.

8. The sealant tape according to any of the preceding claims, wherein there is a second continuous layer of sealant material between the first edge (6) and the layer (8) of pressure-sensitive adhesive.

9. The tape according to any of the preceding claims, wherein the sealant tape (1) has a single hinge (5).

10. The sealant tape according to any of the claims 1 to 8, wherein the sealant tape (1) has two hinges (505a, 505b).

11. The sealant tape according to claim 10, wherein the centre lines of the two hinges (505a, 505b) are 3 - 10 mm apart.

12. A method of manufacturing a sealant tape according to any of the claims 1 to 9, wherein a carrier (2) is provided, in no particular order, with
a) a continuous layer (10) of sealant material and a release liner (11);
b) a layer (8) of a pressure-sensitive adhesive by applying a release liner (9) provided with the layer (8) of pressure-sensitive adhesive to the carrier (2).
